# EUROPEAN PATENT SPECIFICATION

(11) **EP 2 669 160 B1**
(45) Date of publication and mention of the grant of the patent: **06.05.2015**
(21) Application number: 12188725.1
(22) Date of filing: 16.10.2012
(51) Int. Cl.: B62J 6/02, B62J 17/02

(54) **Straddle type vehicle**
Grätschsitz-Fahrzeug
Véhicule de type à selle

(30) Priority: 28.05.2012 JP 2012120776
(43) Date of publication of application: 04.12.2013
(73) Proprietor: Yamaha Hatsudoki Kabushiki Kaisha, Iwata-shi, Shizuoka 438-8501 (JP)
(72) Inventor: Hanai, Tetsuya, Shizuoka, 438-8501 (JP)
(74) Representative: Zimmermann, Tankred Klaus

(56) References cited:
- EP-A1- 2 179 912
- US-A1- 2007 236 949

## Description

### BACKGROUND OF THE INVENTION

### Field of the Invention

The present invention relates to straddle type vehicles, and more particularly, to straddle type vehicles in which a headlight is attached to a front cover.

### Description of the Background Art

Motorcycles, which are a type of straddle type vehicles, are known. Some motorcycles include a handle cover and a front cover. The handle cover covers handlebars. The front cover is located below the handle cover. A headlight and flashers are provided on the front cover. The headlight and other components of a motorcycle including such a handle cover and a front cover are disposed in a more compact manner than in a motorcycle with its handlebars located inside the front cover. In other words, the headlight and other components are disposed on the front cover in an efficient manner that minimizes unused space.

In a motorcycle according to JP 2007-280760 A, the headlight is located below the front cover. The front wheel is located below the headlight. The lowermost point of the headlight is located in its middle in a vehicle width direction.

In a motorcycle according to JP 2007-280760 A, the lowermost point of the headlight is located just above the front wheel. Thus, in the motorcycle according to JP 2007-280760 A, mud or sand that is splashed up when the vehicle is running may adhere to the headlight.

### SUMMARY OF THE INVENTION

An object of the present invention is to provide a straddle type vehicle including a handle cover and a front cover with a headlight of a sufficient size where mud or sand is unlikely to adhere to the headlight.

This object is achieved by a straddle type vehicle according to claim 1.

The inventors found out that, since the motorcycle according to JP 2007-280760 A includes a handle cover, the front cover is relatively small so that little space is present below the headlight that would allow a cover or the like to be provided. Even if one manages to provide a cover below the headlight in the motorcycle according to JP 2007-280760 A, mud or sand may adhere to the lowermost point of the headlight located in the middle in a vehicle width direction, which is the lowermost portion of the headlight.

To prevent mud or sand from adhering to the headlight without increasing the size of the vehicle, a smaller headlight may be provided. However, a smaller headlight will result in a smaller illumination area in front of the motorcycle.

A straddle type vehicle according to the present invention includes: a head pipe; a steering shaft; a handlebar; a handle cover; a front cover; a headlight; and a flasher. The steering shaft is inserted into the head pipe and rotatable relative to the head pipe. The handlebar is connected with a top portion of the steering shaft. The handle cover covers the handlebar. The front cover covers a front portion of the head pipe and is located below the handle cover. The headlight is located in a middle of the front cover in a vehicle width direction. The flasher is provided on the front cover and is located, at least partially, higher than the headlight. The headlight includes a first bulb and a light cover. The first bulb is located in a middle of the headlight in a vehicle width direction. The light cover covers a front portion of the first bulb. The front cover includes a bottom cover located below the light cover. The light cover includes a first bottom edge portion, a second bottom edge portion and a third bottom edge portion in locations visible in a front view of the vehicle. The third bottom edge portion is located in a middle of the vehicle in a vehicle width direction. The first bottom edge portion is located lower than the third bottom edge portion and outward of the third bottom edge portion in a vehicle width direction. The second bottom edge portion is located lower than the third bottom edge portion and opposite the first bottom edge portion in a vehicle width direction, with the third bottom edge portion in between. The bottom cover includes a middle portion. The middle portion is located below the third bottom edge portion and located higher than the first bottom edge portion and the second bottom edge portion.

In the above straddle type vehicle, a bottom cover is provided lower than the headlight. Thus, in the above straddle type vehicle, the headlight is located higher than in an arrangement without such a bottom cover. As such, the above straddle type vehicle may include a handle cover and a front cover with a headlight of a sufficient size, where mud or sand is unlikely to adhere to the headlight.

In the above straddle type vehicle, the third bottom edge portion is located higher than the first and second bottom edge portions. Thus, mud or sand is less likely to adhere to the headlight than in an arrangement where the third bottom edge portion is located lower than the first bottom edge portion and second bottom edge portion.

### BRIEF DESCRIPTION OF THE DRAWINGS

FIG. 1 is a left side view of an entire motorcycle according to an embodiment of the present invention.
FIG. 2 is a partial front view of the motorcycle as viewed from the front.
FIG. 3 is a partial side view of the front cover and rear cover.
FIG. 4 is an enlarged front view of the front cover.

### DETAILED DESCRIPTION OF THE PREFERRED EMBODIMENTS

Some motorcycles include a handle cover and a front cover, where a headlight and flashers are provided on the front cover. In a motorcycle including a handle cover and a front cover, little space is present on the front cover such that, in most cases, no cover or the like is provided below the headlight. Thus, in such a motorcycle, mud or sand often adheres to the headlight.

If a cover or the like is provided below the headlight in such a motorcycle, mud or sand is less likely to adhere to the headlight than in a motorcycle without such a cover or the like. In some motorcycles including a handle cover and a front cover, the bulb of the headlight is located in the middle of the vehicle in a vehicle width direction in order to minimize the dimension of the front cover in a vehicle width direction. The front cover inclines downward toward the front as viewed in a side view. The front cover is bulged toward the middle of the vehicle in a vehicle width direction. In other words, when the middle of the front cover in a vehicle width direction and the periphery of the cover in a vehicle width direction are compared with respect to the same height, the middle of the front cover in a vehicle width direction is located forward of the periphery of the cover in a vehicle width direction. Thus, the bottom edge of the front cover, which is located in its middle in a vehicle width direction, is the lowermost and foremost portion of the front cover. Thus, the bottom edge of the headlight is the foremost portion of the headlight such that mud or sand often adheres to the headlight even when a cover is provided below the headlight.

A smaller headlight may be provided to prevent mud or sand from adhering to it. However, a smaller headlight will result in a smaller headlight area, decreasing the amount of illumination by the headlight. A motorcycle with a small headlight is difficult to drive for a driver.

It occurred to the inventors of the present application to employ an arrangement where a bottom edge portion in the middle of the headlight in a vehicle width direction is located higher than a bottom edge portion in a location other than the middle in a vehicle width direction. Such an arrangement will provide a space in which a cover may be located lower than the headlight. Thus, in an arrangement including a front cover and a handle cover, a cover may be provided lower than the headlight to reduce the likelihood of mud or sand adhering to the headlight without reducing the size of the headlight. Further, since a bottom edge portion in the middle of the headlight in a vehicle width direction is located higher than a bottom edge portion in a location other than the middle in a vehicle width direction, the likelihood of mud or sand adhering to the headlight will be further reduced.

A straddle type vehicle according to an embodiment of the present invention will now be described with reference to the drawings. In the embodiment below, the straddle type vehicle illustrated is a scooter-type motorcycle 10. The same or corresponding components in different drawings are labeled with the same numerals and their description will not be repeated. In the following description, the arrow "F" in drawings indicates the forward direction with respect to the motorcycle 10; the arrow "U" in drawings indicates the upward direction with respect to the motorcycle 10; and the arrow "R" in drawings indicates the right direction with respect to the motorcycle 10.

### <Overall Arrangement>

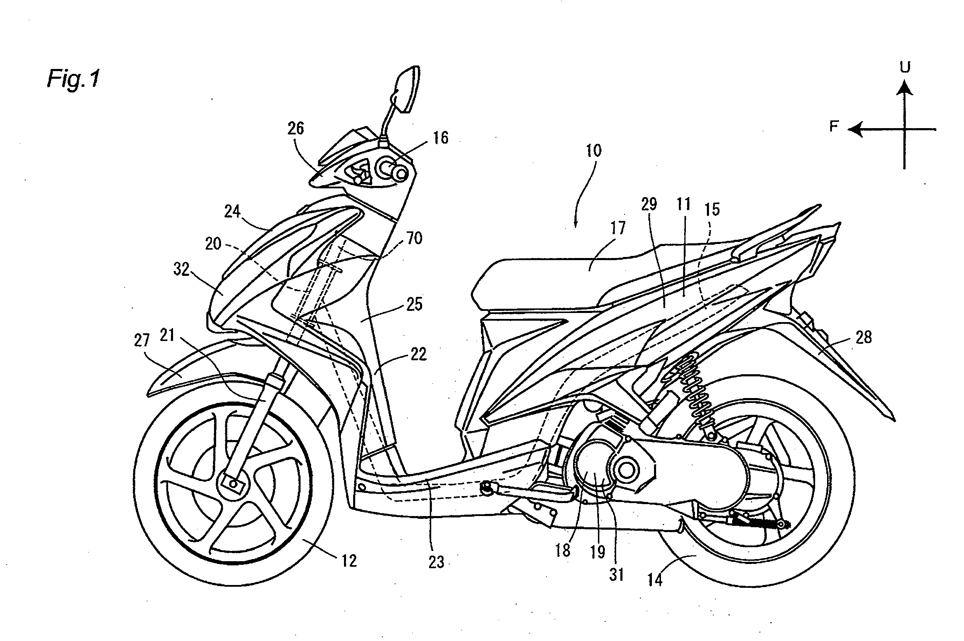

FIG. 1 is a left side view of an entire motorcycle 10 according to the present invention. In the following description, the directions "front/forward", "rear(ward)/behind", "left" and "right" mean such directions as perceived by a rider sitting on the seat of the motorcycle 10, as described below. "Outward/outside in a vehicle width direction" means a direction departing from the middle of the vehicle in a vehicle width direction. In other words, "outward/outside in a vehicle width direction" means a direction toward the right or left from the middle of the vehicle in a vehicle width direction. "Inward in a vehicle width direction" means a direction toward the middle of the vehicle in a vehicle width direction.

A motorcycle 10 includes a vehicle body 11, a front wheel 12 provided at the front of the motorcycle 10, and a rear wheel 14 provided at the rear of the motorcycle 10.

The vehicle body 11 generally includes a body frame 15, handlebars 16, a seat 17 and a power unit 18.

The body frame 15 supports the power unit 18, the seat 17 and other components. The power unit 18 includes an engine 19 and a drive system. In FIG. 1, the body frame 15 is suggested by broken lines. The body frame 15 includes a head pipe 20. A steering shaft 70 is rotatably inserted into the head pipe 20. The handlebars 16 are attached to the upper end of the steering shaft 70. A pair of front fork 21 tubes are attached to the bottom end of the steering shaft 70 with a bracket, not shown, interposed between them. A front wheel 12 is rotatably attached to the bottom end of each of the front fork 21 tubes.

The body frame 15 is covered with a body cover 22. The body cover 22 is made from a resin. The body cover 22 includes a footboard 23, a front cover 24, a rear cover 25, a handle cover 26, a front fender 27, a rear fender 28 and a pair of side covers 29.

The footboard 23 is provided below the seat 17. The footboard 23 extends in a front-to-rear direction.

The front cover 24 is located forward of the seat 17. The front cover 24 covers a front portion of the head pipe 20. A headlight 32a is provided on the front cover 24.

The rear cover 25 covers a rear portion of the head pipe 20. The rear cover 25 extends in a top-to-bottom direction. The rear cover 25 is located rearward of the front cover 24 and is coupled to the front cover 24. The front edge of the footboard 23 is coupled to the bottom edge of the rear cover 25.

The handle cover 26 covers portions of the handlebars 16. The handle cover 26 is provided above the front cover 24.

The front fender 27 is located above the front wheel 12. The front fender 27 is located below the front cover 24. The front fender 27 protrudes forward from the front cover 24. The rear fender 28 is located above the rear wheel 14.

Each side cover 29 is provided below the seat 17 as viewed in a side view. The side cover 29 is located above the rear wheel 14. The side cover 29 extends rearward from below the seat 17.

The handlebars 16 are located forward of the seat 17. The handlebars 16 extend to the left and right directions. A grip that can be grasped by the rider is provided on each of the ends of the handlebars 16.

The seat 17 is located above the power unit 18. A storage space in which an object, such as a helmet, can be stored is provided below the seat 17.

The power unit 18 is located in the vicinity of the rear wheel 14. The power unit 18 includes a CVT case 31, which is not covered with the body cover 22.

### <Front Face of Motorcycle>

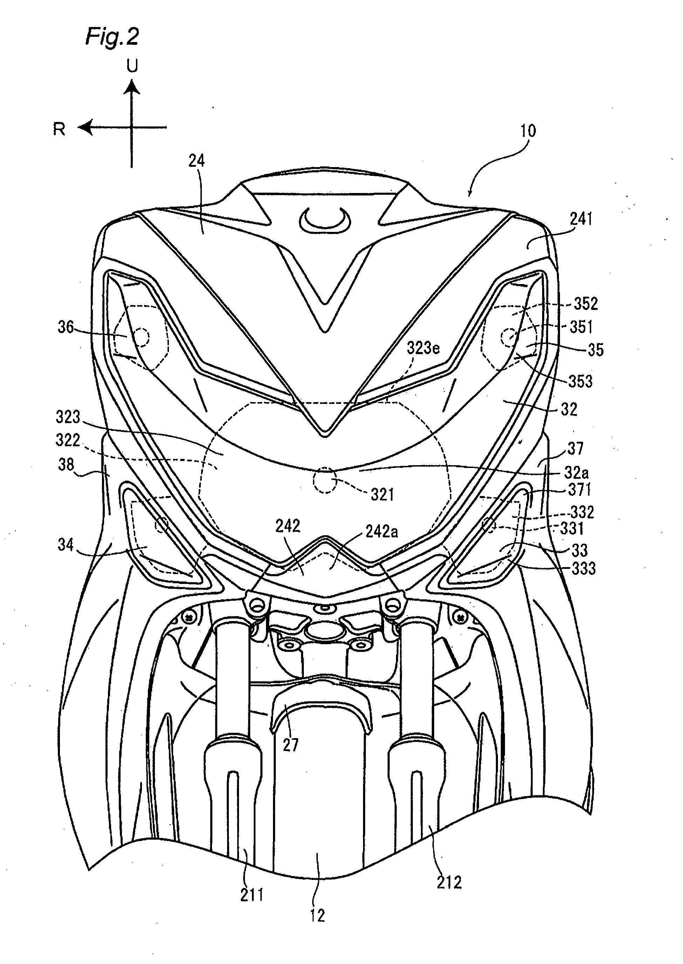

FIG. 2 is a partial enlarged view of the motorcycle 10 as viewed from the front. In FIG. 2, the handlebars 16 and the handle cover 26 are omitted.

A first front fork tube 211 is located to the right of the front wheel 12 in a vehicle width direction. A second front fork tube 212 is located to the left of the front wheel 12. The front cover 24 is located above the front wheel 12.

A headlight unit 32, a first position light 33 and a second position light 34 are provided on the front cover 24.

The headlight unit 32 includes a headlight 32a, a first flasher 35 and a second flasher 36. The headlight unit 32 is constructed by disposing a bulb and a reflector in a space defined by a housing and light cover 323.

The headlight 32a illuminates an area in front of the motorcycle 10. The headlight 32a includes a headlight bulb 321, a headlight reflector 322 and a light cover 323. The headlight 32a is located in the middle of the front cover 24 in a vehicle width direction.

The headlight bulb 321 emits light. The headlight bulb 321 is located in the middle of the headlight 32a in a vehicle width direction. The headlight bulb 321 is located in the middle of the vehicle in a vehicle width direction. The headlight bulb 321 is located below the middle of the front cover 24 as viewed in a vertical direction and in the middle of the vehicle in a vehicle width direction.

The headlight reflector 322 reflects light from the headlight bulb 321 toward the front. The headlight reflector 322 is provided around the headlight bulb 321. The headlight reflector 322 radially expands from behind the headlight bulb 321 toward the front. The headlight reflector 322 has a dimension in a vehicle width direction larger than its dimension in a top-to-bottom direction. The first front fork tube 211 and second front fork tube 212 are located between the left and right edges of the headlight reflector 322 in a vehicle width direction.

The light cover 323 covers front portions of the headlight bulb 321 and headlight reflector 322. The light cover 323 passes light emitted by the headlight bulb 321.

The first flasher 35 includes a flasher bulb 351, flasher reflector 352 and light cover 323. The first flasher 35 is located to the left of the left edge of the headlight reflector 322 in a vehicle width direction.

The flasher bulb 351 emits light. The flasher bulb 351 is located higher than the topmost portions 322c of the headlight 32a.

The flasher reflector 352 reflects light from the flasher bulb 351. The flasher reflector 352 is located around the flasher bulb 351. The flasher reflector 352 radially expands from behind the flasher bulb 351 toward the front.

The light cover 323 further covers the flasher bulb 351 and flasher reflector 352. The light cover 323 passes light emitted by the flasher bulb 351.

The second flasher 36 has a construction similar to that of the first flasher 35, and its detailed description will be omitted. The first flasher 35 and second flasher 36 are symmetrically positioned with respect to the middle of the vehicle in a vehicle width direction.

The first position light 33 includes a position light bulb 331, a position light reflector 332 and a position light cover 333. The first position light 33 is located to the left of the headlight 32a in a vehicle width direction.

The position light bulb 331 emits light. The position light bulb 331 is located to the left of the headlight reflector 322 in a vehicle width direction.

The position light reflector 332 reflects light from the position light bulb 331. The position light reflector 332 radially expands from behind the position light bulb 331 toward the front.

The position light cover 333 covers the position light bulb 331 and position light reflector 332. The position light cover 333 passes light emitted by the position light bulb 331.

The second position light 34 has a construction similar to that of the first position light 33, and its detailed description will be omitted. The first position light 33 and second position light 34 are symmetrically positioned with respect to the middle of the vehicle in a vehicle width direction.

The front cover 24 includes a first light receiving cover 37 and a second light receiving cover 38.

On the first light receiving cover 37 is formed a light receiving portion 371, on which the first position light 33 is provided. The first light receiving cover 37 is located outward of the headlight 32a in a vehicle width direction. The first light receiving cover 37 is located below the first flasher 35.

The second light receiving cover 38 has a construction similar to that of the first light receiving cover 37, and its detailed description will be omitted. The first light receiving cover 37 and second light receiving cover 38 are symmetrically positioned with respect to the middle of the vehicle in a vehicle width direction.

The front cover 24 includes a bottom cover 242. The bottom cover 242 is located below the headlight 32a. The bottom cover 242 is located in the middle of the front cover 24 in a vehicle width direction. The bottom cover 242 includes a front face 242a. The front face 242a faces in the direction of advance of the vehicle.

### <Side Face of Front Cover>

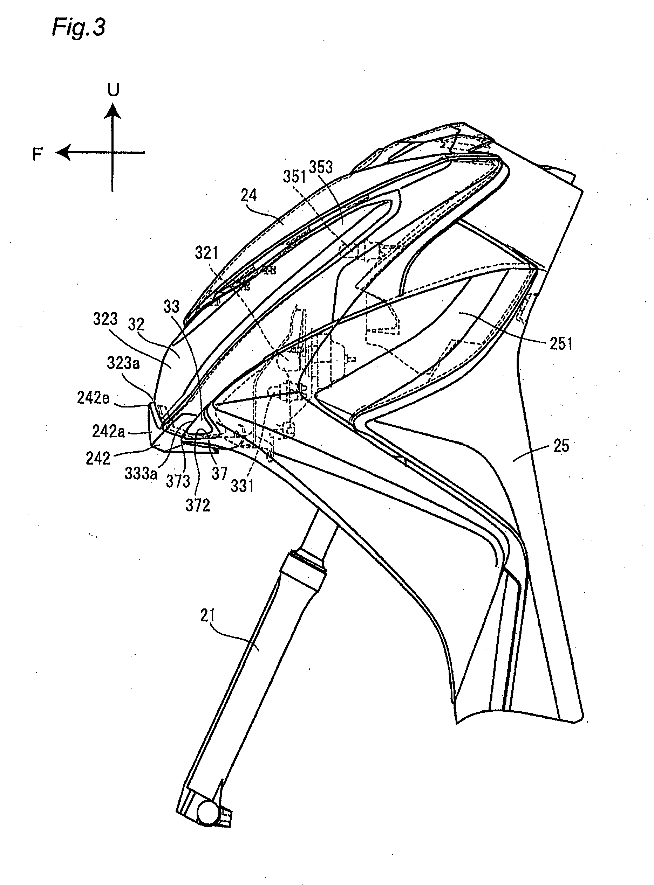

FIG. 3 is a partial side view of the front cover 24 and rear cover 25 as viewed from outside the vehicle in a vehicle width direction. In FIG. 3, the front wheel 12 is omitted.

The front cover 24 inclines downward toward the front. The line of the front of the front cover 24, as viewed in a side view, inclines downward toward the front. The line of the front of the front cover 24 as viewed in a side view is shaped as an arc. The front line of the front cover 24 extends to a location forward of the first light receiving cover 37 as viewed in a side view. The rearmost point of the front cover 24 is located higher than and behind the flasher bulb 351.

A pocket 251, in which an item can be stored, is formed in the rear cover 25. The rear cover 25 covers the rear face of the front cover 24.

The bottom cover 242 is located below the light cover 323. The front face 242a of the bottom cover 242 is located forward of the front edge 373 of the first light receiving cover 37. The top end 242e of the front face 242a of the bottom cover 242 is located forward of the portion of the light cover 323 that is located foremost, labeled 323a. The lowermost point of the bottom cover 242 is located lower than the bottom edge of the first position light 33.

The position light bulb 331 is located forward of the headlight bulb 321. The flasher bulb 351 is located rearward of the headlight bulb 321 and position light bulb 331. The position light bulb 331 is located higher than the top end of the bottom cover 242.

The position light cover 333 includes a plain portion 333a. An exposing opening 372 is formed in the first light receiving cover 37. The plain portion 333a is exposed at the exposing opening 372.

### <Light Cover and Bottom Cover>

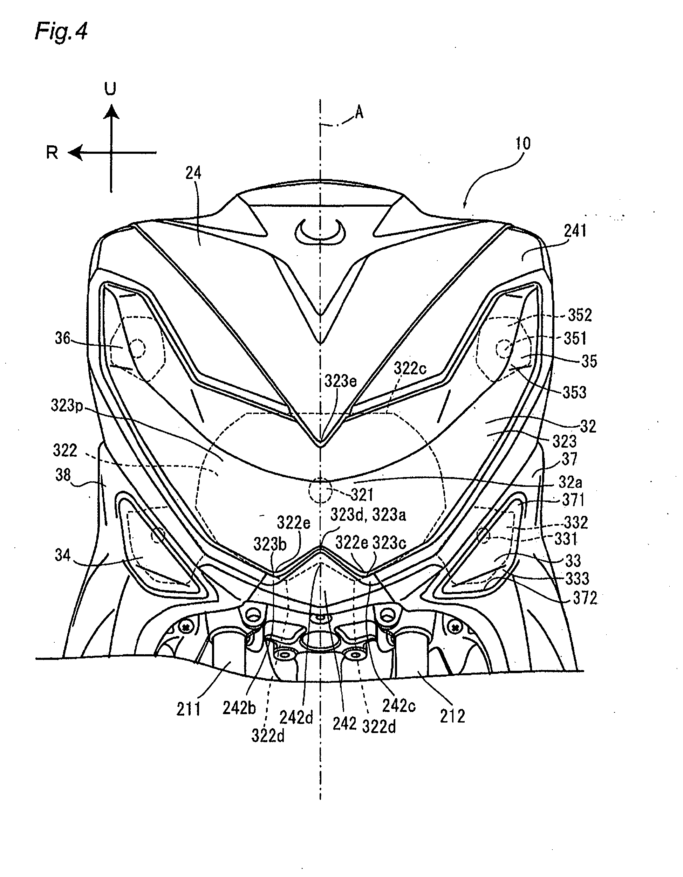

FIG. 4 is a front view of the front cover 24. The one-dot chain line A in FIG. 4 indicates the centerline of the vehicle in a vehicle width direction.

The light cover 323 includes a first bottom edge portion 323b, a second bottom edge portion 323c and a third bottom edge portion 323d.

The first bottom edge portion 323b is located to the right of the middle of the vehicle in a vehicle width direction. The first bottom edge portion 323b is located lower than the third bottom edge portion 323d. The first bottom edge portion 323b is located lowermost of the portions of the headlight 32a that are exposed to the exterior. The first bottom edge portion 323b is located inward of the first front fork tube 211 in a vehicle width direction. The first bottom edge portion 323b is located to the right of the headlight bulb 321 in a vehicle width direction.

The second bottom edge portion 323c is located to the left of the middle of the vehicle in a vehicle width direction. The first bottom edge portion 323b and second bottom edge portion 323c are symmetrically positioned with respect to the one-dot chain line A. The second bottom edge portion 323c is located lower than the third bottom edge portion 323d. The second bottom edge portion 323c is located at the same level as the first bottom edge portion 323b in a vertical direction. The second bottom edge portion 323c is located lowermost of the portions of the headlight 32a that are exposed to the exterior. The second bottom edge portion 323c is located inward of the second front fork tube 212 in a vehicle width direction. The second bottom edge portion 323c is located to the left of the headlight bulb 321 in a vehicle width direction.

The third bottom edge portion 323d is located in the middle of the vehicle in a vehicle width direction. The third bottom edge portion 323d is located higher than the first bottom edge portion 323b and second bottom edge portion 323c in a vertical direction. The third bottom edge portion 323d is located higher than the lowermost point 322d of the headlight reflector 322. The third bottom edge portion 323d is located higher than the lowermost portion 322e of the portions of the headlight reflector 322 that are visible in a front view. The third bottom edge portion 323d is located lower than the headlight bulb 321. The third bottom edge portion 323d is located foremost of the headlight 32a. That is, the third bottom edge portion 323d is identical with the foremost portion 323a of the light cover 323.

The light cover 323 includes a first top edge portion 323e. The first top edge portion 323e is located in the middle of the vehicle in a vehicle width direction. The first top edge portion 323e is located lower than the topmost portions 322c of the portions of the headlight reflector 322 that are covered with the light cover 323 in a vertical direction. The first top edge portion 323e is located higher than the headlight bulb 321.

The bottom cover 242 includes a first recess 242b, a second recess 242c and a middle portion 242d.

The first recess 242b is located lower than the first bottom edge portion 323b. The first recess 242b supports the first bottom edge portion 323b. The first recess 242b is shaped as a downward arc along the portions of the light cover 323 that are close to the first bottom edge portion 323b. The first recess 242b is located to the right of the middle of the vehicle in a vehicle width direction.

The second recess 242c is located lower than the second bottom edge portion 323c. The second recess 242c supports the second bottom edge portion 323c. The second recess 242c is shaped as a downward arc along the portions of the light cover 323 that are close to the second bottom edge 323c. The second recess 242c is located to the left of the middle of the vehicle in a vehicle width direction.

The middle portion 242d is located below the third bottom edge portion 323d. The middle portion 242d is located in the middle of the vehicle in a vehicle width direction. The middle portion 242d supports the third bottom edge portion 323d. The topmost point of the middle portion 242d is located higher than the first bottom edge portion 323b and second bottom edge portion 323c.

### <Advantages of Present Embodiment>

Advantages of the present embodiment will be described below.

In the motorcycle 10 of the above embodiment, the third bottom edge portion 323d located in the middle of the light cover 323 in a vehicle width direction is located higher than the first bottom edge portion 323b and second bottom edge portion 323c. This provides a space below the headlight 32a in which a bottom cover 242 can be provided. The motorcycle 10 provides a space in which a bottom cover 242 can be provided without reducing the size of the headlight 32a. As such, the motorcycle 10 may include a front cover 24 and a handle cover 26 with a headlight 32a of a sufficient size. The headlight 32a is located higher than in an arrangement without a cover below the headlight 32a. Thus, mud or sand is less likely to adhere to the headlight than in a motorcycle without a cover provided below the headlight 32a.

In the motorcycle 10 of the above embodiment, the third bottom edge portion 323d located in the middle of the light cover 323 in a vehicle width direction is located higher than the first bottom edge portion 323b and second bottom edge portion 323c. Thus, mud or sand is less likely to adhere to the headlight than in a motorcycle where a third bottom edge portion 323d located in the middle of the light cover 323 in a vehicle width direction is located lower than a first bottom edge portion 323b and second bottom edge portion 323c.

In the motorcycle 10 of the above embodiment, the first top edge portion 323e located in the middle of the light cover 323 in a vehicle width direction is located lower than the topmost portions 322c of the portions of the headlight reflector 322 that are covered with the light cover 323. This avoids the location of the headlight 32a being higher than is the case if the first top edge portion 323e is located higher than the topmost portions 322c of the portions of the headlight reflector 322 that are covered with the light cover 323.

In the motorcycle 10 of the above embodiment, the flasher bulb 351 is located higher than the topmost portions 322c of the portions of the headlight reflector 322 that are covered with the light cover 323. This avoids the size of the headlight 32a being restricted by the first flasher 35.

In the motorcycle 10 of the above embodiment, the first front fork tube 211 and second front fork tube 212 are located between the left and right edges of the headlight reflector 322 in a vehicle width direction. Thus, the headlight 32a is sufficiently large in a left-to-right direction, ensuring a headlight 32a with a sufficient area.

In the motorcycle 10 of the above embodiment, the first flasher 35 and second flasher 36 are located outward of the left and right edges of the headlight reflector 322 in a vehicle width direction. The first flasher 35 is located to the left of the left edge of the headlight reflector 322. The second flasher 36 is located to the right of the right edge of the headlight reflector 322 in a vehicle width direction. This ensures a sufficient distance between the first flasher 35 and headlight 32a and sufficient distance between the second flasher 36 and a headlight 32a.

In the motorcycle 10 of the above embodiment, the frontmost point 242e of the middle portion 242d of the bottom cover 242 is located forward of the first bottom edge portion 323d, as shown in FIG. 3. Thus, in the motorcycle 10, the bottom cover 242 prevents mud or sand from adhering to the bottom of the headlight 32a.

### [Other Embodiments]

While the above embodiment has illustrated a motorcycle, the present invention is not limited thereto, and can be used in a three- or four wheeled straddle type vehicle.

While the above embodiment provides a first position light 33 below a first flasher 35 and a second position light 34 below a second flasher 36, the present invention is not limited to such a configuration. The present invention may have a first position light 33 and a second position light 34 in locations different from those in the above embodiment. The present invention may have no first position light 33 and no second position light 34.

While in the above embodiment, the first recess 242b supports the first bottom edge portion 323b, the present invention is not limited to such a configuration. The first recess 242b need not support the first bottom edge portion 323b, and a space may be present between the recess 242b and the first bottom edge portion 323b. The same applies to the second recess 242c and middle portion 242d.

While in the above embodiment, the headlight 32a, first flasher 35 and second flasher 36 together form the headlight unit 32, the present invention is not limited to such a configuration. According to the present invention, a headlight 32a, a first flasher 35 and a second flasher 36 may be separate from each other, for example, a cover for the headlight and a cover for the flashers may be separate from each other.

### Explanation of Reference Characters

- 10: motorcycle (straddle type vehicle)
- 12: front wheel
- 16: handlebars
- 20: head pipe
- 24: front cover
- 26: handle cover
- 32a: headlight
- 33: first position light
- 34: second position light
- 35: first flasher
- 36: second flasher
- 70: steering shaft
- 242: bottom cover
- 242b: first recess
- 242c: second recess
- 242d: middle portion
- 321: headlight bulb (first bulb)
- 322: headlight reflector
- 323: light cover
- 323b: first bottom edge portion
- 323c: second bottom edge portion
- 323d: third bottom edge portion
- 323e: first top edge portion
- 351: flasher bulb (second bulb)

## Claims

1. A straddle type vehicle comprising:
a head pipe (20);
a steering shaft (70) inserted into the head pipe (20) and rotatable relative to the head pipe (20);
a handlebar (16) connected with a top portion of the steering shaft (70);
a handle cover (26) covering the handlebar (16);
a front cover (24) covering a front portion of the head pipe (20) and located below the handle cover (26);
a headlight (32a) located in a middle of the front cover (24) in a vehicle width direction; and
a flasher (35, 36) provided on the front cover (24),
wherein the flasher (35, 36) is located, at least partially, higher than the headlight (32a),
the headlight (32a) includes a first bulb (321) and a light cover (323),
the first bulb (321) is located in a middle of the headlight (32a) in a vehicle width direction,
the light cover (323) covers a front portion of the first bulb (321),
the front cover (24) includes a bottom cover (242) located below the light cover (323),
the light cover (323) includes a first bottom edge portion (323b), a second bottom edge portion (323c) and a third bottom edge portion (323d) in locations visible in a front view of the vehicle,
the third bottom edge portion (323d) is located in a middle of the vehicle in a vehicle width direction,
the first bottom edge portion (323b) is located lower than the third bottom edge portion (323d) and outward of the third bottom edge portion (323d) in a vehicle width direction,
the second bottom edge portion (323c) is located lower than the third bottom edge portion (323d) and opposite the first bottom edge portion (323b) in a vehicle width direction, with the third bottom edge portion (323d) in between,
the bottom cover (242) includes a middle portion (242d), and
the middle portion (242d) is located below the third bottom edge portion (323d) and located higher than the first bottom edge portion (323b) and the second bottom edge portion (323c).

2. The straddle type vehicle according to claim 1, wherein:
the light cover (323) includes a first top edge portion (323e),
the first top edge portion (323e) is located in the middle of the vehicle in a vehicle width direction,
the headlight (32a) includes a reflector (322) located around the first bulb (321),
the reflector (322) is covered, at least partially, with the light cover (323), and
the first top edge portion (323e) is located lower than a topmost portion of the reflector (322) as viewed in a front view of the vehicle.

3. The straddle type vehicle according to claim 2, wherein:
the flasher (35, 36) includes a second bulb (351),
the second bulb (351) is located higher than the top edge of the reflector (322) as viewed in a front view of the vehicle.

4. The straddle type vehicle according to any one of claims 1 to 3, further comprising:
a front wheel (12) located below the steering shaft (70);
a first front fork tube (211) rotatably supporting the front wheel (12) and located outward of the front wheel (12) in a vehicle width direction; and
a second front fork tube (212) rotatably supporting the front wheel (12) and located on a side of the front wheel (12) opposite a side with the first front fork tube (211) in a vehicle width direction,
wherein the headlight (32a) further includes a reflector (322) located around the first bulb (321), and
the first front fork tube (211) and the second front fork tube (212) are located between left and right edges of the reflector (322) in a vehicle width direction.

5. The straddle type vehicle according to claim 4, wherein:
the flasher (35, 36) is located outward of an edge of the reflector (322) in a vehicle width direction.

6. The straddle type vehicle according to any one of claims 1 to 5, wherein:
a frontmost point of the middle portion (242d) is located forward of the third bottom edge portion (323d).

7. The straddle type vehicle according to any one of claims 1 to 6, wherein:
the second bottom edge portion (323c) is located at the same height as the first bottom edge portion (323b), and
the first bottom edge portion (323b) and the second bottom edge portion (323c) are located lowermost of the light cover (323).

8. The straddle type vehicle according to any one of claims 1 to 7, further comprising:
a position light (33, 34) located below the flasher (35, 36).

9. The straddle type vehicle according to claim 4 or 5, wherein:
the first bottom edge portion (323b) is located inward of the first front fork tube (211) in a vehicle width direction, and
the second bottom edge portion (323c) is located inward of the second front fork tube (212) in a vehicle width direction.

## Patentansprüche

1. Ein Grätsch-Typ-Fahrzeug, das folgende Merkmale aufweist:
ein Kopfrohr (20);
eine Lenkwelle (70), die in das Kopfrohr (20) eingefügt ist und relativ zu dem Kopfrohr (20) drehbar ist;
eine Lenkstange (16), die mit einem oberen Abschnitt der Lenkwelle (70) verbunden ist;
eine Lenkerabdeckung (26), die die Lenkerstange (16) bedeckt;
eine vordere Abdeckung (24), die einen vorderen Abschnitt des Kopfrohrs (20) bedeckt und unter der Lenkerabdeckung (26) angeordnet ist;
einen Scheinwerfer (32a), der in einer Fahrzeugbreiterichtung in einer Mitte der vorderen Abdeckung (24) angeordnet ist; und
einen Blinker (35, 36), der auf der vorderen Abdeckung (24) vorgesehen ist,
wobei der Blinker (35, 36) zumindest teilweise höher angeordnet ist als der Scheinwerfer (32a),
der Scheinwerfer (32a) eine erste Glühlampe (321) und eine Lichtabdeckung (323) umfasst,
die erste Glühlampe (321) in einer Fahrzeugbreiterichtung in einer Mitte des Scheinwerfers (32a) angeordnet ist,
die Lichtabdeckung (323) einen Vorderabschnitt der ersten Glühlampe (321) bedeckt,
die vordere Abdeckung (24) eine untere Abdeckung (242) umfasst, die unter der Lichtabdeckung (323) angeordnet ist,
die Lichtabdeckung (323) einen ersten Unterkantenabschnitt (323b), einen zweiten Unterkantenabschnitt (323c) und einen dritten Unterkantenabschnitt (323d) umfasst, an Stellen, die in einer Vorderansicht des Fahrzeugs sichtbar sind,
der dritte Unterkantenabschnitt (323d) in einer Fahrzeugbreiterichtung in einer Mitte des Fahrzeugs angeordnet ist,
der erste Unterkantenabschnitt (323b) niedriger als der dritte Unterkantenabschnitt (323d) und in einer Fahrzeugbreiterichtung von dem dritten Unterkantenabschnitt (323d) nach außen angeordnet ist,
der zweite Unterkantenabschnitt (323c) niedriger angeordnet ist als der dritte Unterkantenabschnitt (323d) und gegenüber dem ersten Unterkantenabschnitt (323b) in einer Fahrzeugbreiterichtung, mit dem dritten Unterkantenabschnitt (323d) zwischen denselben,
die untere Abdeckung (242) einen Mittelabschnitt (242d) umfasst, und
der Mittelabschnitt (242d) unter dem dritten Unterkantenabschnitt (323d) angeordnet ist und höher angeordnet ist als der erste Unterkantenabschnitt (323b) und der zweite Unterkantenabschnitt (323c).

2. Das Grätsch-Typ-Fahrzeug gemäß Anspruch 1, bei dem:
die Lichtabdeckung (323) einen ersten Oberkantenabschnitt (323e) umfasst,
der erste Oberkantenabschnitt (323e) in einer Fahrzeugbreiterichtung in der Mitte des Fahrzeugs angeordnet ist,
der Scheinwerfer (32a) einen Reflektor (322) umfasst, der um die erste Glühlampe (321) herum angeordnet ist,
der Reflektor (322) zumindest teilweise mit der Lichtabdeckung (323) bedeckt ist, und
der erste Oberkantenabschnitt (323e) von einer Vorderansicht des Fahrzeugs aus gesehen niedriger angeordnet ist als ein oberster Abschnitt des Reflektors (322).

3. Das Grätsch-Typ-Fahrzeug gemäß Anspruch 2, bei dem:
der Blinker (35, 36) eine zweite Glühlampe (351) umfasst,
die zweite Glühlampe (351) von einer Vorderansicht des Fahrzeugs aus gesehen höher angeordnet ist als die Oberkante des Reflektors (322).

4. Das Grätsch-Typ-Fahrzeug gemäß einem der Ansprüche 1 bis 3, das ferner folgende Merkmale aufweist:
ein Vorderrad (12), das unter der Lenkwelle (70) angeordnet ist;
ein erstes Vordergabelrohr (211), das das Vorderrad (12) drehbar trägt und in einer Fahrzeugbreiterichtung von dem Vorderrad (12) nach außen angeordnet ist; und
ein zweites Vordergabelrohr (212), das das Vorderrad (12) drehbar trägt und in einer Fahrzeugbreiterichtung auf einer Seite des Vorderrads (12) gegenüber einer Seite mit dem ersten Vordergabelrohr (211) angeordnet ist,
wobei der Scheinwerfer (32a) ferner einen Reflektor (322) umfasst, der um die erste Glühlampe (321) herum angeordnet ist, und
das erste Vordergabelrohr (211) und das zweite Vordergabelrohr (212) in einer Fahrzeugbreiterichtung zwischen einer linken und rechten Kante des Reflektors (322) angeordnet sind.

5. Das Grätsch-Typ-Fahrzeug gemäß Anspruch 4, bei dem:
ein Blinker (35, 36) in einer Fahrzeugbreiterichtung von einer Kante des Reflektors (322) nach außen angeordnet ist.

6. Das Grätsch-Typ-Fahrzeug gemäß einem der Ansprüche 1 bis 5, bei dem:
ein vorderster Punkt des Mittelabschnitts (242d) vor dem dritten Unterkantenabschnitt (323d) angeordnet ist.

7. Das Grätsch-Typ-Fahrzeug gemäß einem der Ansprüche 1 bis 6, bei dem:
der zweite Unterkantenabschnitt (323c) auf der gleichen Höhe angeordnet ist wie der erste Unterkantenabschnitt (323b), und
der erste Unterkantenabschnitt (323d) und der zweite Unterkantenabschnitt (323c) an der tiefsten Stelle der Lichtabdeckung (323) angeordnet sind.

8. Das Grätsch-Typ-Fahrzeug gemäß einem der Ansprüche 1 bis 7, das folgendes Merkmal aufweist:
ein Positionslicht (33, 34), das unter dem Blinker (35, 36) angeordnet ist.

9. Das Grätsch-Typ-Fahrzeug gemäß Anspruch 4 oder 5, bei dem:
der erste Unterkantenabschnitt (323b) in einer Fahrzeugbreiterichtung von dem ersten Vordergabelrohr (211) nach innen angeordnet ist, und
der zweite Unterkantenabschnitt (323c) in einer Fahrzeugbreiterichtung von dem zweiten Vordergabelrohr (212) nach innen angeordnet ist.

## Revendications

1. Véhicule de type à selle, comprenant:
un tube de tête (20);
un arbre de direction (70) introduit dans le tube de tête (20) et pouvant tourner par rapport au tube de tête (20);
un guidon (16) connecté à une partie supérieure de l'arbre de direction (70);
un couvercle de guidon (26) recouvrant le guidon (16);
un couvercle avant (24) recouvrant une partie avant du tube de tête (20) et situé au-dessous du couvercle de guidon (26);
un phare (32a) situé au centre du couvercle avant (24) dans le sens de la largeur du véhicule; et
un clignoteur (35, 36) prévu sur le couvercle avant (24),
dans lequel le clignoteur (35, 36) se trouve, au moins partiellement, plus élevé que le phare (32a),
le phare (32a) comporte une première ampoule (321) et un protège-lampe (323),
la première ampoule (321) se trouve au centre du phare (32a) dans le sens de la largeur du véhicule,
le protège-lampe (323) recouvre une partie avant de la première ampoule (321),
le couvercle avant (24) comporte un couvercle inférieur (242) situé au-dessous du protège-lampe (323),
le protège-lampe (323) comporte une première partie de bord inférieur (323b), une deuxième partie de bord inférieur (323c) et une troisième partie de bord inférieur (323d) à des emplacements visibles en vue frontale du véhicule,
la troisième partie de bord inférieur (323d) se trouve au centre du véhicule dans le sens de la largeur du véhicule,
la première partie de bord inférieur (323b) se trouve plus bas que la troisième partie de bord inférieur (323d) et à l'extérieur de la troisième partie de bord inférieur (323d) dans le sens de la largeur du véhicule,
la deuxième partie de bord inférieur (323c) se trouve plus bas que la troisième partie de bord inférieur (323d) et opposée à la première partie de bord inférieur (323b) dans le sens de la largeur du véhicule, la troisième partie de bord inférieur (323d) se trouvant entre les deux,
le couvercle inférieur (242) comporte une partie centrale (242d), et
la partie centrale (242d) se trouve au-dessous de la troisième partie de bord inférieur (323d) et se trouve plus haut que la première partie de bord inférieur (323b) et que la deuxième partie de bord inférieur (323c).

2. Véhicule de type à selle selon la revendication 1, dans lequel:
le protège-lampe (323) comporte une première partie de bord supérieur (323e),
la première partie de bord supérieur (323e) se trouve au centre du véhicule dans le sens de la largeur du véhicule,
le phare (32a) comporte un réflecteur (322) situé autour de la première ampoule (321),
le réflecteur (322) est recouvert, au moins partiellement, par le protège-lampe (323), et
la première partie de bord supérieur (323e) se trouve plus bas que la partie supérieure du réflecteur (322), vu en vue frontale du véhicule.

3. Véhicule de type à selle selon la revendication 2, dans lequel:
le clignoteur (35, 36) comporte une deuxième ampoule (351),
la deuxième ampoule (351) se trouve plus haut que le bord supérieur du réflecteur (322), vu en vue frontale du véhicule.

4. Véhicule de type à selle selon l'une quelconque des revendications 1 à 3, comprenant par ailleurs:
une roue avant (12) située au-dessous de l'arbre de direction (70);
un premier tube de fourche avant (211) supportant de manière rotative la roue avant (12) et situé à l'extérieur de la roue avant (12) dans le sens de la largeur du véhicule; et
un deuxième tube de fourche avant (212) supportant de manière rotative la roue avant (12) et situé d'un côté de la roue avant (12) opposé à un côté avec le premier tube de fourche avant (211) dans le sens de la largeur du véhicule,
dans lequel le phare (32a) comporte par ailleurs un réflecteur (322) situé autour de la première ampoule (321), et
le premier tube de fourche avant (211) et le deuxième tube de fourche avant (212) se trouvent entre les bords gauche et droit du réflecteur (322) dans le sens de la largeur du véhicule.

5. Véhicule de type à selle selon la revendication 4, dans lequel:
le clignoteur (35, 36) se trouve à l'extérieur d'un bord du réflecteur (322) dans le sens de la largeur du véhicule.

6. Véhicule de type à selle selon l'une quelconque des revendications 1 à 5, dans lequel:
un point avant de la partie centrale (242d) se trouve à l'avant de la troisième partie de bord inférieur (323d).

7. Véhicule de type à selle selon l'une quelconque des revendications 1 à 6, dans lequel:
la deuxième partie de bord inférieur (323c) se trouve à la même hauteur que la première partie de bord inférieur (323b), et
la première partie de bord inférieur (323b) et la deuxième partie de bord inférieur (323c) se trouvent dans la partie inférieure du protège-lampe (323).

8. Véhicule de type à selle selon l'une quelconque des revendications 1 à 7, comprenant par ailleurs:
un feu de position (33, 34) situé au-dessous du clignoteur (35, 36).

9. Véhicule de type à selle selon la revendication 4 ou 5, dans lequel:
la première partie de bord inférieur (323b) se trouve à l'intérieur du premier tube de fourche avant (211) dans le sens de la largeur du véhicule, et
la deuxième partie de bord inférieur (323c) se trouve à l'intérieur du deuxième tube de fourche avant (212) dans le sens de la largeur du véhicule.
